# EUROPEAN PATENT SPECIFICATION

(11) **EP 3 570 995 B1**
(45) Date of publication and mention of the grant of the patent: **19.06.2024**
(21) Application number: 18704477.1
(22) Date of filing: 01.02.2018
(51) Int. Cl.: B22F 3/00, B28B 1/00, B33Y 80/00, C04B 35/76, B22F 10/60, B22F 10/64, B28B 23/02, B22F 5/00, B22F 5/12, B22F 10/28, B22F 10/80

(54) **COMPOSITE MATERIAL FOR TURBO MACHINE APPLICATIONS AND CORRESPONDING METHOD**
VERBUNDMATERIAL FÜR TURBOMASCHINENANWENDUNGEN UND ZUGEHÖRIGES VERFAHREN
MATÉRIAU COMPOSITE POUR APPLICATIONS SUR MACHINE TURBO ET PROCÉDÉ CORRESPONDANT

(30) Priority: 23.02.2017 EP 17157621
(43) Date of publication of application: 27.11.2019
(73) Proprietor: Siemens Energy Global GmbH & Co. KG, 81739 München (DE)
(72) Inventor: LEBED, Yaroslav, 13629 Berlin (DE)
(86) International application number: PCT/EP2018/052476
(87) International publication number: WO 2018/153629

(56) References cited:
- US-A- 4 059 712
- US-A1- 2015 003 997
- US-A1- 2016 193 645
- US-A1- 2017 022 111

## Description

The present invention relates to a composite material for an application in a turbo machine, such as a gas turbine. Particularly, the composite material may be envisaged for heat shields applied in the turbine technology, e.g. in the hot gas path, and/or blade technology. Further, a method to manufacture the composite material making use of additive manufacturing technology, is presented.

Additive manufacturing techniques comprise e.g. powder bed methods, such as selective laser melting (SLM) or selective laser sintering (SLS) or electron beam melting (EBM). Additive manufacturing methods have particularly proven to be useful and advantageous in the fabrication of prototypes or complex and filigree components of lightweight design or cooling components e.g. comprising mazelike internal structures.

Further, additive manufacture stands out for its short chain of process steps, as a manufacturing step can be carried out directly based on corresponding CAD/CAM and/or construction data.

Powder bed manufacturing methods such as selective laser melting or selective laser sintering are relatively well known methods for fabricating, prototyping or manufacturing parts or components from a powder material, for instance. Conventional apparatuses or setups for such methods usually comprise a manufacturing or build platform on which the component is built layer-by-layer after the feeding of a layer of base material which may then be melted, e.g. by the energy of a laser beam and subsequently solidified. The layer thickness is determined by a wiper that moves, e.g. automatically, over the powder bed and removes excess material. Typical layer thicknesses amount to 20 µm or 40 um. During the manufacture, said laser beam scans over the surface and melts the powder in selected areas which may be predetermined by a CAD-file according to the geometry of the component to be manufactured.

A heat shield for a turbine is e.g. described in EP 2 883 003 B1.

Currently produced ceramic heat-shields (CHSs) used in gas turbines tend to cause failure or form cracks and break into pieces after a certain operating period. This can cause significant damage e.g. to the turbine blades and vanes. Said failure or damage happens due various reasons, i.e. thermal shock and acoustic vibrations or combinations thereof.

Currently, there are two main types of heat-shields used, namely heat shields which are either fully ceramic or fully metallic, e.g. coated with a so-called TBC ("thermal barrier coating"). However, until today, attempts to reinforce a heat shield, such as a CHS with a metallic scaffold, in order to overcome the described drawbacks of delamination, failed. This may be due to the difficulty of adapting thermal expansion coefficients of the dissimilar materials involved.

US 2016/193645 A1 discloses a composite material according to the preamble of claim 1.

It is thus an object of the present invention to provide means, by which the mentioned drawbacks can be overcome. Particularly, a novel composite material and an according manufacturing method for the composite material is provided, particularly a material, which does - in a turbine application in a hot gas environment - not break or tend to fall into pieces, e.g. when or after the ceramic material of the respective component or heat shield shows cracks.

The mentioned object is achieved by the subject-matters of claims 1 and 7. Advantageous embodiments are subject-matters of the dependent claims.

An aspect of the present invention relates to a composite material for an application in a turbo machine, such as a gas turbine. The composite material comprises a metallic lattice and a ceramic matrix, wherein the metallic lattice pervades the ceramic metrics, thereby mechanically reinforcing or supporting the ceramic matrix against thermal and/or mechanical loads or impacts in an application of the composite material, e.g. in during an operation a respective turbo machine. Particularly, the composite material shall withstand peeling of or delamination of parts of e.g. the ceramic, during operation, e.g. under thermal loads of up to 1500° C or even more.

Another aspect of the present invention relates to a method to manufacture said composite material comprising additively manufacturing the metallic lattice, e.g. by powder bed based selective laser melting or electron beam melting, infiltrating the metallic lattice by a ceramic base material, such as a powder or slurry, such that an inside of the metallic lattice is at least partly filled or pervaded, such as coated, and sintering the infiltrated metallic lattice, wherein the ceramic powder is solidified and the composite material is formed.

By these means, it may - with the aid of additive manufacturing technology - be achieved that particularly the metallic lattice holds together the whole composite material e.g. composed of the lattice and the matrix. This is e.g. achieved in a way such that a delamination, breakage or cracking of ceramic parts off the composite material is avoided. As a consequence, secondary damage of the turbine may be also prevented, e.g. damage of heat shields of the gas turbine.

In an embodiment, the metallic lattice is or comprises a regular mesh-like structure which is configured such that it avoids peeling of parts from the composite material during thermal and/or mechanical loads in an operation of the composite material. This embodiment may be advantageous for expediently and reliably holding together the ceramic matrix.

The term "regular" shall denote that a long-range order shall prevail or be present, over roughly the whole extension of the respective component.

In an embodiment, the metallic lattice is or comprises an irregular mesh-like structure which is configured such that it avoids peeling of parts from the composite material during thermal and/or mechanical loads in an operation of the composite material.

The term "irregular" shall denote solely a short-range order of the lattice, wherein the lattice may be densified or particular regions of the respective heat shield material, e.g. according to an (expectedly) increased thermal and/or mechanical load. In other regions of the respective component, e.g. where the described load is expected to be smaller, the lattice may be configured less densified, e.g. with larger lattice constants.

In an embodiment the coefficient of thermal expansion of the material of the metallic lattice and that one of the ceramic matrix is chosen to be similar, preferably approximately equal. A difference in thermal expansion coefficients of the metallic lattice on one side and the ceramic on the other side shall at least be comparably small. This embodiment allows for a design of the composite material, wherein the ceramic as well as the metallic lattice are awarded with similar thermal expansion behaviour.

In an embodiment the metallic lattice and a ceramic matrix are joined by positive locking to one another. This embodiment may ease to achieve the purpose of the present invention.

The metallic lattice is - at least to a predetermined or certain extent - (freely) movable or slidable within the ceramic matrix, thus allowing some mutual movement, slide of freedom between the metallic lattice and the ceramic matrix, which may be necessary to compensate for different thermal expansion behavior of the mentioned materials. Said movement may relate to one, two or three independent spatial dimensions. This embodiment advantageously allows to provide a play of free spaces in which parts of the composite material may expand. This may, in turn, prevent the whole composite material from breakage or cracking, as stresses in the material may systematically be reduced.

The composite material comprises internal cavities. These internal cavities function as spaces into which parts of the composite material may expand, as described herein.

A further aspect of the present invention relates to a heat shield for a turbo machine, such as a gas turbine. According to this embodiment, the heat shield comprises the composite material as described and is or is applied as a part of a combustion chamber of the gas turbine or any other part of the respective gas flow path hardware.

In an embodiment, the metallic lattice is only partly filled, coated or infiltrated with the ceramic powder, such that cavities in the composite material remain which may - in an application or operation of the composite material - receive or adopt thermal expansion of the lattice material and/or the ceramic material (matrix), as described above.

In an embodiment the metallic lattice is designed such that, the additive manufacturing is carried out such that, the infiltrating is carried out such that and/or the sintering is carried out such that shrinkage of the material of the ceramic matrix during sintering establishes the described cavities. Thereby, the known adverse effect of shrinkage during sintering may be exploited by the presented method for an adoption of thermal expansion and/or stresses originating from dissimilar thermal expansion coefficients of the respective metallic and the ceramic.

A further non-claimed aspect relates to a computer program or computer program product and/or a, preferably non-volatile, computer readable medium comprising executable program instructions which are suitable to effect a data processing unit or an additive manufacturing device to design the geometry of the metallic lattice e.g. by computerised topology optimisation means, wherein thermal expansion coefficients of the metallic lattice and the ceramic matrix are considered and/or taken into account.

Advantages relating to the described material or component may as well pertain to the method and vice versa.

Further features, expediencies and advantageous refinements become apparent from the following description of the exemplary embodiment in connection with the Figures.
Figure 1 shows a schematic view of a composite material according to the present invention.
Figure 2 shows a schematic view of the composite material according to an alternative embodiment.
Figure 3 shows a schematic indication of at least parts of a turbo machine, preferably a gas turbine, comprising the composite material according to the present invention.
Figure 4 shows a schematic flow chart of process steps according to the presented method.

Like elements, elements of the same kind and identically acting elements may be provided with the same reference numerals in the figures.

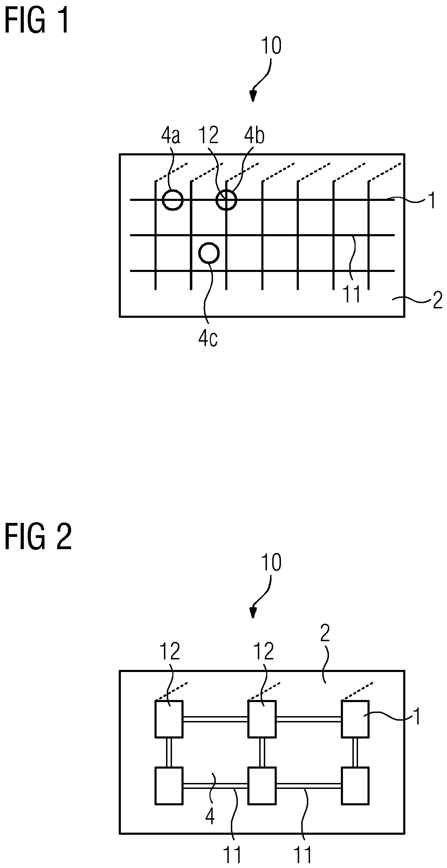

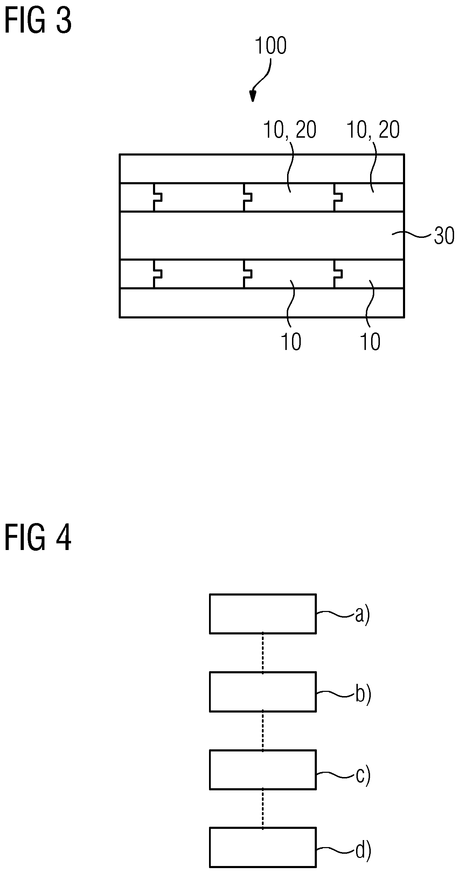

Figure 1 shows schematically a composite material 10. The composite material 10 is preferably shown in a sectional view, indicating an inside of said material. The composite material 10 comprises a metallic lattice 1. The composite material 10 further comprises a ceramic matrix 2. The metallic lattice 1 pervades the ceramic matrix 2. In other words, the ceramic matrix 2 encloses or envelopes the metallic lattice 1. The composite material 10 composed of or comprising said metal and ceramic is preferably configured such that the metallic lattice 1 reinforces or supports the ceramic matrix 2 in such a way, that the composite material 10 can withstand mechanical, thermal, and/or thermal mechanical loads as usual in the hot gas flow path of gas turbines without tendency for the ceramic to break or peel off. The metallic lattice 1 may be or comprise a regular, mesh-like structure. The dashed lines in the upper part of Figure 1 indicate, that the metallic lattice preferably pervades the ceramic matrix 2 in a spatial manner in order to serve its purpose for the whole component, in which said composite material 10 is actually applied (cf. Figure 3).

Although the metallic lattice is shown in Figure 1 only by means of crossed lines, it is expected that the indicated lattice structure, of course, comprises a certain extension, e.g. of several millimetres.

Indicated by numeral 4, the composite material 10 comprises cavities. The cavities serve for providing spaces or play which may account for or receive a thermal expansion of parts of the composite material 10, preferably the ceramic matrix. In other words, the cavities may adopt or receive material (thermally) expanding into these spaces as a consequence of a hot ambient, such as 1500° C, of a turbine gas flow.

Cavity 4a is particularly arranged in an area of an elongated part, such as a strut 11 or truss, of the metallic lattice 1. Cavity 4b is shown arranged in an area of a cross-over 12 or intersection of struts of the metallic lattice 1.

Additionally or alternatively, cavity 4c may be provided in an area only taken by the ceramic lattice material 2. However, it is preferred that the spaces or volume of the cavities contacts the metallic material.

Even though this is not explicitly indicated in Figure 1, the metallic lattice 1 may be or comprise an irregular mesh-like structure, which may be expedient for a systematic or deliberate local strengthening of the composite material, e.g. at its surfaces which may be more prone to breakage or damage in a hot gas ambient.

In general, the component or composite material described herein as well as the described method (see below) stabilise or reinforce the described composite material in a way that a component comprising said material is less prone to cracking such that parts of the ceramic peel off or break or fall apart. This effect is particularly achieved by the described metallic lattice which - in other words - mechanically holds the ceramic material (matrix) together.

Figure 2 shows an alternative embodiment of the metallic lattice. In contrast to the indication in Figure 1, the metallic lattice 1 comprises sections of varying spatial extension. Particularly, the struts 11 forming connections between the corner points or cross-overs 12, comprise a smaller thickness or width as compared to the cross-overs 12. In other words, the corners 12 are embodied compact or a cube-like, further providing smaller thicknesses or extensions as compared to a length of the struts 11.

The length of the struts 11 may define the size of an according lattice cell of the metallic lattice 1.

Deviating from the indication of Figure 2, the struts 11 and/or the cross-overs 12 may as well be star-shaped or dendritic or branched in order to functionally hold together the dissimilar materials of the composite.

Although this is also not explicitly indicated, the metallic lattice 1 may comprise or constitute a regular or irregular mesh of any perceivable lattice geometry, e.g. chosen from face-centred cubic (FCC), body-centred cubic (BCC), rhombic, and tetragonal, hexagonal, prism-like of further morphologies.

Figure 3 shows a turbo machine 100, such as a turbine, particularly a gas turbine in a simplified schematic. Preferably the turbine 100 is shown only in part. Reference numeral 30 indicates a hot gas flow path of said turbine. Said gas flow path 30 extends horizontally in Figure 3. Said gas flow path is, preferably, defined by components 20 made of or mainly comprising the described composite material 10. Said components 20 may constitute tiles of a combustion chamber of said turbine 100. To this effect, said tiles may be connected or fixed to one another by means of a tongue-groove-joint or sealing or the like, as shown in Figure 3 at the interface between the components 20.

For instance, in an application of gas turbine, tiles of the combustion chamber constitute heat shields in order to withstand the harsh temperature environment during operation. As a consequence of the high temperatures, conventional tiles are prone to break or tend to deteriorate and crack or fall apart over time which may cause serious secondary damage to the turbine.

According to the present invention, the described composite material is applied for said heat shield tiles. Thereby, the probability of cracking, breaking or e.g. peeling off of parts of the ceramic can be significantly reduced, as compared to prior art heat shields.

Figure 4 indicates method or process steps according to an embodiment of the present invention.

Particularly reference numeral a) indicates additively manufacturing the metallic lattice 1, e.g. by selective laser melting or electron beam melting, preferably a powder bedbased manufacturing technique.

Further, reference numeral b) indicates an, e.g. computerized, topology optimization step, wherein thermal expansion coefficients of e.g. the metallic lattice 1 and the ceramic matrix 2 are considered, e.g. edited by a user of a corresponding data processing system (not explicitly indicated) or computer program.

Reference numeral c) indicates infiltrating the metallic lattice 1 by a ceramic powder such that an inside of the metallic lattice 1 is at least partly filled with the ceramic.

Still further, reference numeral d) indicates sintering the infiltrated metallic lattice 1, wherein the ceramic powder is solidified and the composite material 10 is formed.

By means of the provided cavities or spaces as described above, according to the design of the metallic lattice and with the aid of additive manufacturing as well as topology optimisation technology (see below), it may be achieved that differences in thermal expansion coefficients of the metallic lattice on one side and a ceramic material (matrix) on the other side may be compensated for such that stresses or tensions are advantageously not established in the composite material but e.g. balanced out.

The scope of protection of the invention is not limited to the examples given hereinabove.

## Claims

1. Composite material (10) for application in a turbo machine (100), such as a gas turbine, the composite material (10) comprising a metallic lattice (1) and a ceramic matrix (2),
wherein the metallic lattice (1) pervades the ceramic matrix (2), thereby mechanically reinforcing the ceramic matrix (2) against thermal and/or mechanical loads in an operation of the composite material (10), wherein the metallic lattice (1) is - to a predetermined extent - movable or slidable within or relative to the ceramic matrix (2), thus allowing some mutual movement of these components, e.g. due to different thermal expansion behaviour,
**characterized in that** the composite material further comprises internal cavities (4) serving for providing spaces or play which receives a thermal expansion of parts of the composite material, preferably the ceramic matrix.

2. Composite material (10) according to claim 1, wherein the metallic lattice (1) comprises a regular mesh-like structure which is configured such that it avoids peeling of parts from the composite material (10) during thermal and/or mechanical loads in an operation of the composite material (10) .

3. Composite material (10) according to claim 1 or 2, wherein the metallic lattice (1) comprises an irregular mesh-like structure which is configured such that it avoids peeling of parts from the composite material (10) during thermal and/or mechanical loads in an operation of the composite material (10).

4. Composite material (10) according to one of the previous claims, wherein a coefficient of thermal expansion of the material of the metallic lattice (1) and that one of ceramic matrix (2) is chosen to be similar.

5. Composite material (10) according to one of the previous claims, wherein the metallic lattice (1) and the ceramic matrix (2) are joined by positive locking to one another.

6. Heat shield (20) for a turbo machine (100), particularly a part of a combustion chamber of a gas turbine, comprising the composite material (10) according to one of the previous claims.

7. Method to manufacture a composite material (10) according to one of claims 1 to 6, comprising the steps of:
- a) additively manufacturing the metallic lattice (1), e.g. by selective laser melting or electron beam melting,
- b) infiltrating the metallic lattice (1) by a ceramic base material such that an inside of the metallic lattice (1) is only partly filled such that cavities (4) in the composite material (10) remain which may - in an operation of the composite material (10) - receive thermal expansion of the lattice material (1), and
- c) solidifying, such as sintering the infiltrated metallic lattice (1), wherein the ceramic base material is solidified and the composite material (10) is formed.

## Patentansprüche

1. Verbundmaterial (10) zur Anwendung in einer Turbomaschine (100), wie etwa einer Gasturbine, wobei das Verbundmaterial (10) ein Metallgitter (1) und eine Keramikmatrix (2) umfasst, wobei das Metallgitter (1) die Keramikmatrix (2) durchzieht und dadurch die Keramikmatrix (2) gegen thermische und/oder mechanische Belastungen in einem Betriebseinsatz des Verbundmaterials (10) mechanisch verstärkt, wobei das Metallgitter (1) in einem vorgegebenem Maß innerhalb oder gegenüber der Keramikmatrix (2) bewegbar oder verschiebbar ist, wodurch eine gewisse gegenseitige Bewegung dieser Komponenten, z. B. aufgrund eines unterschiedlichen thermischen Ausdehnungsverhaltens, ermöglicht wird,
**dadurch gekennzeichnet, dass** das Verbundmaterial ferner innere Hohlräume (4) umfasst, die zum Bereitstellen von Räumen oder Spiel dienen, die/das eine thermische Ausdehnung von Teilen des Verbundmaterials, vorzugsweise der Keramikmatrix, aufnehmen/aufnimmt.

2. Verbundmaterial (10) nach Anspruch 1, wobei das Metallgitter (1) eine regelmäßige netzartige Struktur umfasst, die derart ausgestaltet ist, dass sie ein Abschälen von Teilen von dem Verbundmaterial (10) während thermischer und/oder mechanischer Belastungen in einem Betriebseinsatz des Verbundmaterials (10) verhindert.

3. Verbundmaterial (10) nach Anspruch 1 oder 2, wobei das Metallgitter (1) eine unregelmäßige netzartige Struktur umfasst, die derart ausgestaltet ist, dass sie ein Abschälen von Teilen von dem Verbundmaterial (10) während thermischer und/oder mechanischer Belastungen in einem Betriebseinsatz des Verbundmaterials (10) verhindert.

4. Verbundmaterial (10) nach einem der vorangehenden Ansprüche, wobei ein Wärmeausdehnungskoeffizient des Materials des Metallgitters (1) und derjenige der Keramikmatrix (2) einander ähnlich ausgewählt sind.

5. Verbundmaterial (10) nach einem der vorangehenden Ansprüche, wobei das Metallgitter (1) und die Keramikmatrix (2) formschlüssig miteinander verbunden sind.

6. Hitzeschild (20) für eine Turbomaschine (100), insbesondere einen Teil einer Brennkammer einer Gasturbine, der das Verbundmaterial (10) nach einem der vorangehenden Ansprüche umfasst.

7. Verfahren zur Herstellung eines Verbundmaterials (10) nach einem der Ansprüche 1 bis 6, folgende Schritte umfassend:
- a) additives Fertigen des Metallgitters (1), z. B. durch selektives Laserschmelzen oder Elektronenstrahlschmelzen,
- b) Durchdringenlassen des Metallgitters (1) durch ein keramisches Basismaterial, derart dass ein Inneres des Metallgitters (1) nur teilweise gefüllt ist, sodass Hohlräume (4) in dem Verbundmaterial (10) verbleiben, die in einem Betriebseinsatz des Verbundmaterials (10) eine Wärmeausdehnung des Gittermaterials (1) aufnehmen können, und
- c) Verfestigen, wie etwa Sintern, des durchdrungenen Metallgitters (1), wobei das keramische Basismaterial verfestigt wird und das Verbundmaterial (10) ausgebildet wird.

## Revendications

1. Matériau (10) composite pour application dans une turbomachine (100), telle qu'une turbine à gaz, le matériau (10) composite comprenant un réseau (1) métallique et une matrice (2) céramique, dans lequel le réseau (1) métallique pénètre partout dans la matrice (2) céramique, en renforçant ainsi mécaniquement la matrice (2) céramique à l'encontre de charges thermiques et/ou mécaniques dans un fonctionnement du matériau (10) composite, dans lequel le réseau (1) métallique est - dans une mesure déterminée à l'avance - mobile ou coulissant dans ou par rapport à la matrice (2) céramique, en permettant ainsi un certain déplacement mutuel de ces composants, dû par exemple à un comportement différent en dilatation thermique,
**caractérisé en ce que** le matériau composite comprend en outre des cavités (4) internes servant à procurer des espaces ou du jeu, qui reçoit une dilatation thermique de parties du matériau composite, de préférence de la matrice céramique.

2. Matériau (10) composite suivant la revendication 1, dans lequel le réseau (1) métallique comprend une structure maillée régulière, qui est configurée de manière à éviter un pelage de parties du matériau (10) composite pendant des charges thermiques et/ou mécaniques dans un fonctionnement du matériau (10) composite.

3. Matériau (10) composite suivant la revendication 1 ou 2, dans lequel le réseau (1) métallique comprend une structure maillée irrégulière, qui est configurée de manière à empêcher un pelage de parties du matériau (10) composite pendant des charges thermiques et/ou mécaniques dans un fonctionnement du matériau (10) composite.

4. Matériau (10) composite suivant l'une des revendications précédentes, dans lequel un coefficient de dilatation thermique du matériau du réseau (1) métallique et celui de la matrice (2) céramique sont choisis de manière à être semblables.

5. Matériau (10) composite suivant l'une des revendications précédentes, dans lequel le réseau (1) métallique et la matrice (2) céramique sont joints par un verrouillage positif l'un à l'autre.

6. Bouclier (20) thermique d'une turbomachine (100), en particulier une partie d'une chambre de combustion d'une turbine à gaz, comprenant le matériau (10) composite suivant l'une des revendications précédentes.

7. Procédé de fabrication d'un matériau (10) composite suivant l'une des revendications 1 à 6, comprenant les stades dans lesquels :
- a) on fabrique additivement le réseau (1) métallique, par exemple par fusion laser sélective ou fusion par faisceau d'électrons,
- b) on infiltre le réseau (1) métallique par un matériau céramique de base, de manière à ce que l'intérieur du réseau (1) métallique ne soit rempli que seulement en partie, de manière à ce qu'il reste dans le matériau (10) composite des cavités (4), qui peuvent - lorsque le matériau (10) composite est en fonctionnement - recevoir une dilatation thermique du matériau (1) du réseau, et
- c) on solidifie, tel que l'on fritte, le réseau (1) métallique infiltré, dans lequel on solidifie le matériau céramique de base et on forme le matériau (10) composite.
